# EUROPÄISCHE PATENTANMELDUNG

(11) **EP 1 139 641 A2**
(43) Veröffentlichungstag der Anmeldung: **04.10.2001**
(21) Anmeldenummer: 01103104.4
(22) Anmeldetag: 09.02.2001
(51) Int. Cl.: H04M 3/22, H04M 3/42

(54) **Verfahren zur Zustandssignalisierung eines Teilnehmeranschlusses in einem Kommunikationsnetz mit Kommunikationsanlagen**

(30) Priorität: 31.03.2000 DE 10016244
(71) Anmelder: SIEMENS AKTIENGESELLSCHAFT, 80333 München (DE)
(72) Erfinder: Catley, Ian, 82178 Puchheim (DE); Fraas, Wolfgang, 82515 Wolfratshausen (DE); Gartner, Martin, 82024 Taufkirchen (DE); Honold, Stefan, 81476 München (DE); Von Ow, Hans-Peter, Dr., 81379 München (DE)

(57) **Zusammenfassung**

Die Erfindung betrifft ein Verfahren, bei dem in zumindest einem Speicher (STF), der zumindest einem ersten Teilnehmeranschluß (T11, T21, T31, T22) zugeordnet ist, ein Verweis auf einen zweiten Teilnehmeranschluß (T12, T32), dessen Zustand (ST) am ersten Teilnehmeranschluß signalisiert wird, abgelegt ist. Bei einer Zuordnung des ersten Teilnehmeranschlusses (T11, T21, T31) zu einer ersten Kommunikationsanlage (PABX1) und einer Zuordnung des zweiten Teilnehmeranschlusses (T12, T32) zu einer zweiten Kommunikationsanlage (PABX2) wird dem zumindest einen ersten Teilnehmeranschluß (T11, T21, T31) eine Gruppeninformation (G1, G2) zugeordnet und die Gruppeninformation wird für eine Meldungsverdichtung in einem Speicher (STR) abgelegt, der dem zweiten Teilnehmeranschluß (T12, T32) zugeordnet ist. Außerdem wird bei einer Zustandsänderung des zweiten Teilnehmeranschlusses eine Meldung (m) über die Zustandsänderung mit der Gruppeninformation (G1, G2) an die erste Kommunikationsanlage (PABX1) gesendet für eine Vermittlung einer Meldung (m) mit einer Information über die Zustandsänderung an den ersten Teilnehmeranschluß (T11, T21, T31).

## Beschreibung

Innerhalb einer Kommunikationsanlage besteht die Möglichkeit, Zustandsinformationen zu Wahlzielen, die durch Direktruftasten an einem Kommunikationsendgerät anwählbar sind, an optischen Anzeigeeinrichtungen, die zu Direktruftasten weiterer Kommunikationsendgeräte zugeordnet sind, zu signalisieren. Beispielsweise kann durch eine schnell blinkende Leuchtdiode ein ankommendes Gespräch, durch eine langsam blinkende Leuchtdiode ein Zustand einer geparkten Verbindung und durch eine ausgeschaltete Leuchtdiode ein freies Wahlziel signalisiert werden (Hicom 300E V2.0, Beschreibung der Leistungsmerkmale, Kap. 3.16 und Kap. 5.3.1, 23.04.1999, Siemens Sachnummer: P31003-G1036-L100-3-18). Eine derartige Funktionalität ist bislang nur innerhalb einer Kommunikationsanlage möglich. Zu Bereitstellung der Funktionalität wird in einem Speicher, der einem ersten Teilnehmeranschluß zugeordnet ist, dem der Zustand eines zweiten Teilnehmeranschlusses zu signalisieren ist, ein Verweis auf den zweiten Teilnehmeranschluß abgelegt, dessen Zustand zu signalisieren ist. In entsprechender Weise ist in einem Speicher der dem zweiten Teilnehmeranschluß zugeordnet ist ein Rückverweis auf den ersten Teilnehmeranschluß abgelegt.

Die der vorliegenden Erfindung zugrundeliegende Aufgabe besteht darin, ein Verfahren zur kommunikationsanlagenübergreifenden Zustandssignalisierung eines Teilnehmeranschlusses in einem Kommunikationsnetz mit mehreren Kommunikationsanlagen anzugeben.

Diese Aufgabe wird erfindungsgemäß durch ein Verfahren mit den in Anspruch 1 angegebenen Merkmalen gelöst.

Vorteilhafte Weiterbildungen des erfindungsgemäßen Verfahrens sind den Ansprüchen 2 bis 8 zu entnehmen.

Erfindungsgemäß wird in zumindest einem Speicher, der zumindest einem ersten Teilnehmeranschluß zugeordnet ist, ein Verweis auf einen zweiten Teilnehmeranschluß abgelegt. Der Zustand des zweiten Teilnehmeranschlusses ist am ersten Teilnehmeranschluß zu signalisieren. Bei einer Zuordnung des ersten Teilnehmeranschlusses zu einer ersten Kommunikationsanlage und einer Zuordnung des zweiten Teilnehmeranschlusses zu einer zweiten Kommunikationsanlage wird dem zumindest einen ersten Teilnehmeranschluß eine Gruppeninformation zugeordnet. Diese Gruppeninformation wird in einem Speicher abgelegt, der dem zweiten Teilnehmeranschluß zugeordnet ist. Im Falle einer Zustandsänderung des zweiten Teilnehmeranschlusses wird eine Meldung über die Zustandsänderung mit der Gruppeninformation an die erste Kommunikationsanlage gesendet, um die Meldung von dort an den ersten Teilnehmeranschluß weiter zu vermitteln.

Ein wesentlicher Aspekt des erfindungsgemäßen Verfahrens ist darin zu sehen, daß bei einer Vielzahl von ersten Teilnehmeranschlüssen, denen der Zustand eines zweiten Teilnehmeranschlusses zu signalisieren ist, nur eine einzige Gruppeninformation in dem Speicher für den zweiten Teilnehmeranschluß abzulegen ist. Gerade bei einer kommunikationsanlagenübergreifenden Zustandssignalisierung ist dies ein entscheidender Vorteil, zumal pro Partnerkommunikationsanlage innerhalb des Kommunikationsnetzes nur eine Meldung über eine Zustandsänderung gesendet werden muß. Dies trägt wiederum zu einer reduzierten Auslastung von Übertragungskanälen bei. Insbesondere bei einer Übertragung der Zustandsänderungsmeldungen über Signalisierungskanäle ist dies äußerst vorteilhaft.

Gemäß einer vorteilhaften Ausgestaltung der Erfindung wird für den Fall, daß der erste Teilnehmeranschluß und der zweite Teilnehmeranschluß zur selben Kommunikationsanlage zugeordnet sind, ein Rückverweis auf den ersten Teilnehmeranschluß in einem dem zweiten Teilnehmeranschluß zugeordneten Speicher abgelegt. Bei einer Zustandsänderung des zweiten Teilnehmeranschlusses wird dann eine Meldung über die Zustandsänderung direkt an den ersten Teilnehmeranschluß gesendet.

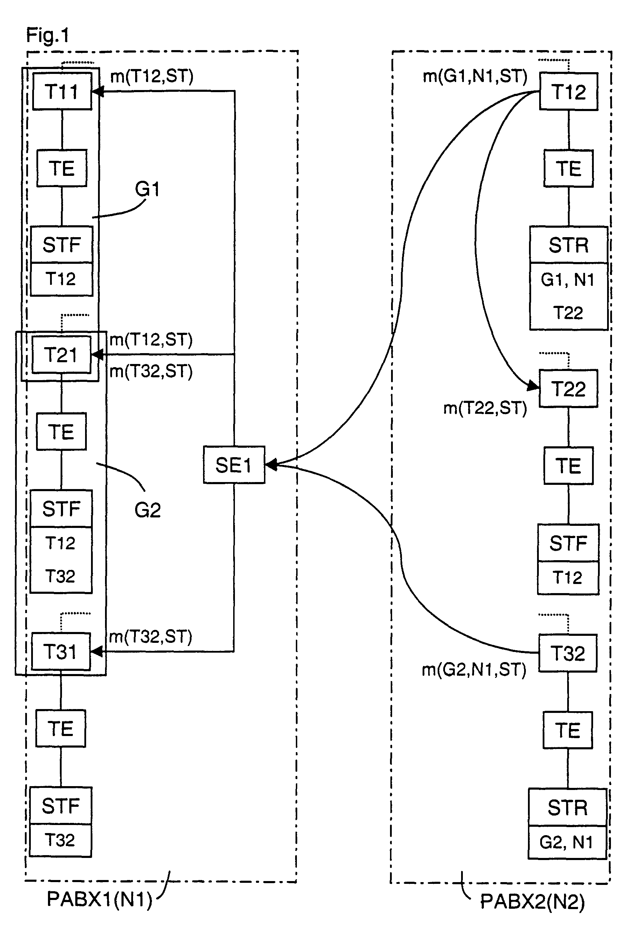

Die Erfindung wird nachfolgend an einem Ausführungsbeispiel anhand der Zeichnung näher erläutert. Es zeigt
- Figur 1: ein Kommunikationsnetz mit zwei Kommunikationsanlagen und Teilnehmeranschlüssen, deren Zustand an anderen Teilnehmeranschlüssen zu signalisieren ist oder an denen der Zustand anderer Teilnehmeranschlüsse signalisiert wird.

Figur 1 zeigt ein Kommunikationsnetz mit zwei Nebenstellenanlagen PABX1 und PABX2. Zu der Nebenstellenanlage PABX1 sind Teilnehmeranschlüsse T11, T21 und T31 zugeordnet, an denen jeweils der Zustand zumindest eines anderen Teilnehmeranschlusses signalisiert wird. Der Nebenstellenanlage PABX2 sind Teilnehmeranschüsse T12 und T32, deren Zustand an einem anderen Teilnehmeranschluß signalisiert wird, und ein Teilnehmeranschluß T22 zugeordnet, dem der Zustand eines anderen Teilnehmeranschlusses signalisiert wird.

Den Teilnehmeranschlüssen T11, T21, T31 und T22 ist jeweils ein Teilnehmerendgerät TE mit einem Speicher STF zugeordnet, in dem Verweise auf Teilnehmeranschlüsse abgelegt sind, deren Zustand zu signalisieren ist. Im vorliegenden Fall enthält der dem Teilnehmeranschluß T11 zugeordnete Speicher STF einen Verweis auf den Teilnehmeranschluß T12 der Nebenstellenanlage PABX2. Der Zustand des Teilnehmeranschlusses T12 ist außerdem am Teilnehmeranschluß T21 zu signalisieren. Aus diesem Grund weist der dem Teilnehmeranschluß T21 zugeordnete Speicher STF ebenfalls einen Verweis auf den Teilnehmeranschluß T12 auf. Da die Teilnehmeranschlüsse T11 und T21 zur Nebenstellenanlage PABX1 zugeordnet sind, während der Teilnehmeranschluß T12 zur Nebenstellenanlage PABX2 zugeordnet ist, wird den Teilnehmeranschlüssen T11 und T21 eine Gruppeninformation G1 zugeordnet. Diese Gruppeninformation G1 wird außerdem in einem dem Teilnehmeranschluß T12 zugeordneten Speicher STR abgelegt. Außerdem wird dort zusätzlich zur Gruppeninformation G1 eine Knotennummer N1 für die Nebenstellenanlage PABX1 als eindeutige Identifizierungskennzeichnung innerhalb des Kommunikationsnetzes abgespeichert. Der Nebenstellenanlage PABX2 ist die Knotenzahl N2 zugeordnet. Alternativ wäre es möglich, innerhalb des Kommunikationssystems Gruppeninformationen zu verwenden, die eindeutige Rückschlüsse in Bezug auf eine Zuordnung der mit einer entsprechenden Gruppeninformation versehenen Teilnehmeranschlüsse zu einer bestimmten Nebenstellenanlage erlaubt.

Analog zur Zuordnung der Gruppeninformation G1 zu den Teilnehmeranschlüssen T11 und T21 wird den Teilnehmeranschlüssen T21 und T31 eine Gruppeninformation G2 zugeordnet, da an beiden Teilnehmeranschlüssen der Zustand des zur Nebenstellenanlage PABX2 zugeordneten Teilnehmeranschlusses T32 zu signalisieren ist. Aus diesem Grund enthalten die den Teilnehmeranschlüssen T21 und T31 über ein Teilnehmerendgerät TE zugeordneten Speicher STF jeweils einen Verweis auf den Teilnehmeranschluß T32. Des weiteren ist in dem zu dem Teilnehmeranschluß T32 zugeordneten Speicher STR die Gruppeninformation G2 einschließlich der Knotenkennzahl N1 der ersten Nebenstellenanlage PABX1 abgespeichert. Eine besonders einfache Zuordnung von Gruppeninformationen ergibt sich, wenn die Teilnehmeranschlüsse, denen eine gemeinsame Gruppeninformation zugeordnet ist, Mitglieder einer netzweiten Anrufübernahmegruppe sind. In diesem Fall ergibt sich lediglich ein zusätzlicher Konfigurationsaufwand für die Anrufübernahmegruppe.

Des weiteren ist der Zustand des Teilnehmeranschlusses T12 am Teilnehmeranschluß T22, der zur selben Nebenstellenanlage PABX2 zugeordnet ist, zu signalisieren. Der dem Teilnehmeranschluß T22 zugeordnete Speicher STF weist daher einen Verweis auf den Teilnehmeranschluß T12 auf. Anders als in den vorangehend beschriebenen Fällen ist in dem zum Teilnehmeranschluß T12 zugeordneten Speicher STR ein direkter Rückwärtsverweis auf den Teilnehmeranschluß T22 und keine etwaige Gruppeninformation abgespeichert, da die Teilnehmeranschlüsse T12 und T22 zur selben Kommunikationsanlage PABX2 zugeordnet sind.

Bei einer Zustandsänderung des Teilnehmeranschlusses T12 wird eine Meldung m(T22,ST) über die Zustandsänderung mit einer Information über den aktuellen Zustand ST an den Teilnehmeranschluß T22 gesendet. Außerdem wird eine die Zustandsänderung ST des Teilnehmers T12 anzeigende Meldung m(G1,N1,ST) mit der Gruppeninformation G1 und der Knotennummer N1 als Summenmeldung an eine Steuerungseinheit SE1 der Nebenstellenanlage PABX1 gesendet. Dabei wird die zugehörige Meldung ein einziges Mal für alle Gruppenmitglieder an die Nebenstellenanlage PABX1 gesendet. In der Steuerungseinheit SE1 der Nebenstellenanlage PABX1 wird die empfangende Meldung über die Zustandsänderung des Teilnehmeranschlusses T12 ausgewertet, wofür die in der Meldung enthaltene Gruppeninformation G1 verwendet wird. Anhand der in der empfangenen Meldung enthaltenen Gruppeninformation G1 wird die empfangene Meldung in Form der Meldungen m(T12,ST) an die Teilnehmeranschlüsse T11 und T21 weitervermittelt. In entsprechender Weise wird bei einer Zustandsänderung des Teilnehmeranschlusses T32 eine Meldung m(G2,N1,ST) an die Steuerungseinheit SE1 gesendet und von dort aus an die Teilnehmeranschlüsse T21 und T31 weitervermittelt.

Die Meldungen über Zustandsänderungen werden vorzugsweise über Signalisierungskanäle an jeweilige Partnerkommunikationsanlagen in einem Kommunikationsnetz übermittelt. Wie bereits erwähnt, wird eine in der Meldung über eine Zustandsänderung enthaltene Zustandsinformation in einem Speicher abgespeichert, der einem Teilnehmeranschluß zugeordnet ist, dem die Zustandsänderung zu signalisieren ist. Vorzugsweise wird die jeweilige Zustandsinformation an einer Teilnehmeranschlußdirektruftaste eines Teilnehmerendgerätes TE, das dem jeweiligen Teilnehmeranschluß zugeordnet ist, optisch signalisiert. Die optische Signalisierung kann beispielsweise durch unterschiedliche frequent blinkende Leuchtdioden oder durch unterschiedliche Farbdarstellungen erfolgen.

Die Anwendung des erfindungsgemäßen Verfahrens ist nicht auf das hier beschriebene Ausführungsbeispiel beschränkt.

## Patentansprüche

1. Verfahren zur Zustandssignalisierung eines Teilnehmeranschlusses in einem Kommunikationsnetz mit Kommunikationsanlagen, bei dem
- in zumindest einem Speicher (STF), der zumindest einem ersten Teilnehmeranschluß (T11, T21, T31, T22) zugeordnet ist, ein Verweis auf einen zweiten Teilnehmeranschluß (T12, T32), dessen Zustand (ST) am ersten Teilnehmeranschluß signalisiert wird, abgelegt ist,
**dadurch gekennzeichnet,**
**daß** bei einer Zuordnung des ersten Teilnehmeranschlusses (T11, T21, T31) zu einer ersten Kommunikationsanlage (PABX1) und einer Zuordnung des zweiten Teilnehmeranschlusses (T12, T32) zu einer zweiten Kommunikationsanlage (PABX2)
- dem zumindest einen ersten Teilnehmeranschluß (T11, T21, T31) eine Gruppeninformation (G1, G2) zugeordnet wird und die Gruppeninformation für eine Meldungsverdichtung in einem Speicher (STR), der dem zweiten Teilnehmeranschluß (T12, T32) zugeordnet ist, abgelegt wird,
- bei einer Zustandsänderung des zweiten Teilnehmeranschlusses eine Meldung (m) über die Zustandsänderung mit der Gruppeninformation (G1, G2) an die erste Kommunikationsanlage (PABX1) gesendet wird für eine Vermittlung einer Meldung (m) mit einer Information über die Zustandsänderung an den ersten Teilnehmeranschluß (T11, T21, T31).

2. Verfahren nach Anspruch 1,
**dadurch gekennzeichnet,**
**daß** bei einer Zuordnung des ersten Teilnehmeranschlusses (T22) und des zweiten Teilnehmeranschlusses (T12) zur selben Kommunikationsanlage (PABX2)
- ein Rückverweis auf den ersten Teilnehmeranschluß (T22) in einem Speicher (STR), der dem zweiten Teilnehmeranschluß (T12) zugeordnet ist, abgelegt wird,
- bei einer Zustandsänderung des zweiten Teilnehmeranschlusses eine Meldung (m) über die Zustandsänderung an den ersten Teilnehmeranschluß (T22) gesendet wird.

3. Verfahren nach einem der Ansprüche 1 oder 2,
**dadurch gekennzeichnet,**
**daß** die Gruppeninformation (G1, G2)eine Zuordnung des ersten Teilnehmeranschlusses (T11, T21, T31) zu der ersten Kommunikationsanlage (PABX1) angibt.

4. Verfahren nach einem der Ansprüche 1 bis 3,
**dadurch gekennzeichnet,**
**daß** die Gruppeninformation (G1, G2) einen zusätzlichen Verweis auf eine innerhalb des Kommunikationsnetzes eindeutige Identifizierungskennzeichnung (N1) für die erste Kommunikationsanlage (PABX1) enthält, zu der der erste Teilnehmeranschluß (T11, T21, T31) zugeordnet ist.

5. Verfahren nach einem der Ansprüche 1 bis 4,
**dadurch gekennzeichnet,**
**daß** Teilnehmeranschlüsse (T11, T21, T31), denen eine Gruppeninformation (G1, G2) zugeordnet ist, Mitglieder einer netzweiten Anrufübernahmegruppe sind.

6. Verfahren nach einem der Ansprüche 1 bis 5,
**dadurch gekennzeichnet,**
**daß** bei einer kommunikationsanlagenübergreifenden Zustandssignalisierung Summenmeldungen über Zustandsänderungen an die jeweiligen Kommunikationsanlagen gesendet werden.

7. Verfahren nach einem der Ansprüche 1 bis 6,
**dadurch gekennzeichnet,**
**daß** Meldungen über Zustandsänderungen über Signalisierungskanäle an die jeweiligen Kommunikationsanlagen übermittelt werden.

8. Verfahren nach einem der Ansprüche 1 bis 8,
**dadurch gekennzeichnet,**
**daß** eine Zustandsinformation (ST) zu einem zweiten Teilnehmeranschluß (T12, T32) entsprechend dem Inhalt eines Speichers (STF), der einem ersten Teilnehmeranschluß (T11, T21, T31, T22) zugeordnet ist und in dem ein Verweis auf den zweiten Teilnehmeranschluß abgelegt ist, an einer Teilnehmeranschlußdirektruftaste eines Endgerätes (TE), das am ersten Teilnehmeranschluß angeschlossen ist, signalisiert wird.
